# EUROPÄISCHE PATENTANMELDUNG

(11) **EP 2 774 898 A1**
(43) Veröffentlichungstag der Anmeldung: **10.09.2014**
(21) Anmeldenummer: 13158150.6
(22) Anmeldetag: 07.03.2013
(51) Int. Cl.: C03C 17/36

(54) **Beschichtete Scheibe mit teilentschichteten Bereichen**

(71) Anmelder: Saint-Gobain Glass France, 92400 Courbevoie (FR)
(72) Erfinder: Arslan, Ilkay, 52074 Aachen (DE); Behmke, Michael, 40227 Düsseldorf (DE); Droste, Stefan, 52134 Herzogenrath (DE); Von der Weiden, Ingo, 52074 Aachen (DE); Wohlfeil, Dirk, 4730 Raeren (BE)
(74) Vertreter: Lendvai, Tomas

(57) **Zusammenfassung**

Beschichtete Scheibe mit Kommunikationsfenster mindestens umfassend:
a. eine Grundscheibe (1),
b. eine metallhaltige Beschichtung (2) auf der Grundscheibe (1),
c. eine einschichtete Gitterfläche (3) auf der metallhaltigen Beschichtung (2) aus sich kreuzenden, Gitterlinien (4), wobei
d. die sich kreuzenden Gitterlinien (4) einen Winkel α (Alpha) von 30° bis 60° zur optischen Distorsionsrichtung (A) der Grundscheibe (1) einnehmen.

## Beschreibung

Die Erfindung betrifft eine beschichtete Scheibe mit Fenstern in Form von teilentschichteten Bereichen zur Durchlässigkeit von radiofrequenter Strahlung sowie ein Verfahren zu deren Herstellung und deren Verwendung.

Scheiben mit metallischen Schichten sind sowohl im Bereich der Bauverglasungen als auch im Bereich der Fahrzeugverglasungen weit verbreitet. In Abhängigkeit von der metallischen Beschichtung beeinflussen diese metallbasierten Beschichtungen das Transmissions-, Reflexions- und Absorptionsverhalten von elektromagnetischer Strahlung. Insbesondere die Verringerung der Wärmestrahlung oder die elektrische Heizung der Glasoberfläche sind Kernfunktionen vieler Glasbeschichtungen auf Basis von elektrisch leitfähigen Metallen.

Beschichtungen aus Silber verringern deutlich die Transmission infraroter Wärmestrahlung in dem hinter der Scheibe liegenden Raum eines Fahrzeuges oder Gebäudes. Insbesondere bei Fahrzeugen kann diese Eigenschaft noch über einen elektrischen Anschluss mit einer Heizfunktion der silberhaltigen Beschichtung kombiniert werden. Der spezifische Flächenwiderstand von Silber ermöglicht die Beheizung einer Scheibe mit sehr dünnen silberhaltigen Schichten. Scheiben mit silberhaltigen oder metallischen Beschichtungen finden sich daher aufgrund der genannten Vorteile in immer mehr Fahrzeugen.

Scheiben mit silberhaltigen Beschichtungen beinhalten aber auch Nachteile, so wird beispielsweise radiofrequente Strahlung von vielen metallhaltigen Beschichtungen reflektiert. Die Funktionsweise vieler Sensoren, Navigations-, Telekommunikations-oder Radiogeräte wird hierdurch deutlich beeinträchtigt. Um diese Probleme zu lösen, ist in der Regel eine zumindest teilflächige Entschichtung der metallhaltigen Beschichtung notwendig. Im Beispiel von elektromagnetischer Strahlung im Radiofrequenzbereich wie FM, AM, UHF, VHF, Radar oder Mikrowellenstrahlung ist hierzu eine netz- oder gitterartige Entschichtung notwendig. Die Gittermaschen müssen dabei einen Linienabstand aufweisen, welcher deutlich kleiner als die fragliche Wellenlänge der gewünschten elektromagnetischen Strahlung ist. Hierzu werden beispielsweise mit einem geeigneten Laser die metallhaltigen Beschichtungen in Form von Linien entfernt. Da nur geringe Anteile der metallhaltigen Beschichtung entfernt werden müssen, bleibt die Infrarotstrahlen-reflektierende Wirkung größtenteils erhalten.

EP 0 678 483 B1 offenbart ein Glassubstrat mit mehreren dünnen Schichten. Diese Schichten umfassen eine Haftschicht auf der Basis von Titanoxid, Zinnoxid oder Tantaloxid, eine Deckschicht und eine Funktionsschicht aus der Gruppe der rostfreien Stahle. Die Dicke der Funktionsschicht beträgt bevorzugt 15 nm bis 45 nm.

US 2002/0192473 A1 offenbart ein transparentes Substrat mit einer mehrlagigen Beschichtung, welche Sonneneinstrahlung beeinflussen kann. Die Beschichtung umfasst mindestens eine funktionelle Metallschicht aus Niob, Tantal oder Zirkonium und eine Deckschicht aus Aluminiumnitrid, Alumiumoxynitrid oder Siliziumnitrid.

US 2011/0146172 A1 offenbart ein transparentes Substrat mit einer dünnen mehrschichtigen Beschichtung. Die mehrlagige Beschichtung umfasst dabei mindestens zwei absorbierende Funktionsschichten und zwei transparente Schichten aus einem dielektrischen Material. Die Funktionsschichten enthalten bevorzugt ein Metall der Gruppe aus Niob, Tantal und Zirkonium. In einer bevorzugten Ausführungsform sind die Funktionsschichten zumindest teilweise nitriert.

US 2007/0082219 A1 offenbart ein heizbares Glassubstrat mit einer mehrlagigen silberhaltigen Beschichtung. Die Beschichtung erlaubt sowohl eine Temperaturkontrolle im Fahrzeug als auch eine Heizfunktion der Scheibe. Die Beschichtung und damit die Scheibe sind für elektromagnetische Strahlung undurchlässig.

DE 198 17 712 C1 offenbart eine Glasscheibe mit einer Beschichtung und einem Strahlungsfenster. Das Fenster ist einem begrenzten zusammenhängenden Flächenbereich der Platte ausgebildet, in dem ein Verhältnis von schichtfreier Fläche zur Gesamtfläche von mindestens 25 % bei flächiger Verteilung von schichtfreien und beschichteten Flächen vorliegt.

WO2004/051869 A2 offenbart eine metallisch beschichtete Scheibe, welche eine für Radiofrequenzsignale durchlässiges Fenster aufweist. Das Fenster beinhaltet verschiedene für Radiofrequenzsignale durchlässige Strukturen, beispielsweise vertikale oder horizontale Balken oder zickzackförmige Strukturen.

US 6,730,389 B2 offenbart eine metallisch beschichtete Scheibe, welche mehrere miteinander verbundene für radiofrequente Strahlung durchlässige Fenster aufweist.

WO 2012/066324 A1 offenbart ein Verfahren zur Herstellung einer beschichteten Verglasung mit einem für elektromagnetische Strahlung im Radiofrequenzbereich durchlässigen Fenster. Das Fenster wird durch eine zweidimensionale kurvenförmige Strukturierung mittels eines Lasers erzeugt.

Wird eine beschichte Scheibe im Bereich der Kommunikationsfenster zumindest teilweise entschichtet, so kommt es beim Biegeprozess im Übergangsbereich zwischen der beschichteten Scheibe und der teilentschichteten Scheibe zu Spannung im Glas. Diese Spannungen resultieren wahrscheinlich aus der unterschiedlichen Wärmeaufnahme der beschichteten und teilentschichteten Bereiche auf der Glasoberfläche. Folgen des Spannungsaufbaus im Grenzbereich zwischen beschichteter Scheibenoberfläche und dem Kommunikationsfenster sind in vielen Fällen optische Verzerrungen auf der Glasoberfläche, welche sich störend auf den Gesamteindruck der Scheibe auswirken. Viele Fahrzeughersteller verlangen aufgrund der gesetzlichen Bestimmungen, beispielsweise ECE R43, zudem die Einhaltung enger Grenzwerte im Bereich der optischen Qualität der Fahrzeugscheibe.

Die Aufgabe der vorliegenden Erfindung liegt darin, eine metallisch beschichtete Scheibe bereitzustellen, welche im Grenzbereich zwischen teilentschichtetem Kommunikationsfenster und der flächigen Beschichtung der Scheibe keine oder zumindest verringerte optischen Verzerrungen aufweist.

Die Aufgabe der vorliegenden Erfindung wird gemäß dem unabhängigen Anspruch 1 gelöst. Bevorzugte Ausführungen gehen aus den Unteransprüchen hervor.

Ein erfindungsgemäßes Verfahren zur Herstellung einer beschichteten Scheibe mit Kommunikationsfenster sowie deren Verwendung gehen aus weiteren unabhängigen Ansprüchen hervor.

Die erfindungsgemäße beschichtete Scheibe mit Kommunikationsfenster umfasst mindestens eine Grundscheibe mit einer metallhaltigen Beschichtung. Die Scheibe enthält bevorzugt Flachglas, Floatglas, Quarzglas, Borosilikatglas, Kalk-Natron-Glas und/oder Gemische davon. Alternativ kann die Scheibe auch Polymere wie Polycarbonat oder Polymethylmethacrylat (Plexiglas) umfassen. Die Beschichtung enthält bevorzugt Zinn-dotiertes Indiumoxid (ITO), Aluminium-dotiertes Zinkoxid (AZO), Fluor-dotiertes Zinnoxid (FTO, SnO₂:F), Antimon-dotiertes Zinnoxid (ATO, SnO₂:Sb), Aluminium, Zink, Indium, Gallium, Silber, Gold, Zinn, Wolfram, Kupfer, Cadmium, Niob, Strontium, Silizium, Zink, Selen und/oder Gemische oder Legierungen davon, besonders bevorzugt Silber. Neben der eigentlichen Beschichtung sind bevorzugt noch weitere dielektrische Schichten vorhanden. Die dielektrische Schicht umfasst bevorzugt SiO₂, SnO₂, Bi₂O₃, ZnO, TiO₂, Ta₂O₅, AlN, Si₃N₄ und/oder Gemische davon. Die Reihenfolge der Abscheidung von dielektrischer Schicht und Funktionsschicht auf der Verbundscheibe ist variabel, bevorzugt werden mehrere Funktionsschichten und dielektrische Schichten auf der Verbundscheibe abgeschieden. Optional können weitere Schichten, beispielsweise Deckschichten, vorhanden sein. Die metallhaltige Beschichtung ist bevorzugt undurchlässig für Radar- und/oder Radiowellen.

Die Grundscheibe weist auf der metallhaltigen Beschichtung eine lokal begrenzte, entschichtete Gitterfläche auf. Die Gitterfläche wird aus sich kreuzenden, parallelen Gitterlinien gebildet. Die sich kreuzenden, parallelen Gitterlinien bilden bevorzugt einen Winkel von 80° bis 100°, besonders bevorzugt 90°. Der Ausdruck "Parallel" umfasst im Sinne der Erfindung Abweichungen der Tangente von bis zu 15° von der idealen parallelen Geraden. Gleichzeitig umfassen die sich kreuzenden Gitterlinien einen Winkel α (Alpha) im Bereich von 30° bis 60° zur optischen Distorsionsrichtung (Verzeichnung, optische Verzerrung) der Grundscheibe. Die Distorsionsrichtung gibt die Hauptrichtung optischer Verzerrungen einer Floatglasscheibe an (auch Floatstruktur genannt, wobei die Floatstruktur parallel zur Fahrzeuglängsachse liegt.), welche sich näherungsweise parallel zur Produktionsrichtung (auch Ziehrichtung genannt) der Floatglasscheibe (vom Zinnbad aufs Laufband) bilden. Die erfindungsgemäße Anordnung der Gitterlinien in einem Winkel α von 30° bis 60° (Grad) verringert überraschenderweise die optischen Störungen und Verzerrung an der Grenze zwischen der Gitterfläche und der metallhaltigen Beschichtung. Die Winkel der sich kreuzenden Gitterlinien können auch unterschiedliche Winkel α, α₁,... im Bereich von 30° bis 60° annehmen.

Die Gitterlinien weisen bevorzugt eine Breite von 30 µm bis 200 µm, besonders bevorzugt 70 µm bis 120 µm auf. Die Breite richtet sich nach der betreffenden elektromagnetischen Strahlung und der optischen Auflösung des zur Erzeugung notwendigen Laserscanners.

Die Gitterlinien bilden bevorzugt Rauten, Parallelogramme und/oder Vierecke. Je nach, insbesondere räumlicher Geometrie der Scheibe sind auch abgerundete oder teilweise abgerundete Sensor- oder Kommunikationsfenster möglich.

Die sich kreuzenden, parallelen Gitterlinien weisen einen Abstand von 0,1 mm bis 15 mm, bevorzugt 0,7 mm bis 3 mm auf. Der bevorzugte Abstand der Gitterlinien ermöglicht eine ausreichende Transparenz für radiofrequente elektromagnetische Wellen. Je nach Wellenlänge kann der Abstand der parallelen Gitterlinien noch weiter variiert werden.

Die metallhaltige Beschichtung ist bevorzugt undurchlässig für Radar- und/oder Radiowellen.

Die Grundscheibe umfasst bevorzugt Floatglas. Die sich kreuzenden, parallelen Gitterlinien weisen bevorzugt einen Winkel von 30° bis 60°, besonders bevorzugt von 40° bis 50°, zur Floatglasproduktionsrichtung der Grundscheibe auf. Der Ausdruck "Floatglasproduktionsrichtung" beschreibt die Laufrichtung des Glases beim Floatglasproduktionsprozess. Überraschenderweisen sind die optischen Störungen nach dem Biegen der teilentschichteten Scheibe niedriger, wenn die Gitterlinien einen oben genannten Winkel zur Laufrichtung des Glases im Zinnbad (Floatglasprozess) und anschließend im Laufband aufweisen.

Die Grundscheibe weist bevorzugt einen Schwarzdruck auf 2% bis 20 % der Oberfläche der Grundscheibe auf. Der Schwarzdruck umfasst bevorzugt Eibrennfarben und ist bevorzugt im Randbereich der Scheibe angeordnet. In einer alternativen Ausgestaltung können die erfindungsgemäßen Sensorfenster sich auch innerhalb oder teilweise innerhalb des Schwarzdrucks befinden.

Die sich kreuzenden, parallelen Gitterlinien nehmen bevorzugt einen Winkel von 40° bis 50° ein. Innerhalb dieses Winkelbereiches sind die optischen Verzerrung im Bereich des teilentschichteten Sensorfensters überraschenderweise minimal und mit dem Auge des Betrachters kaum wahrnehmbar.

Die Erfindung umfasst des Weiteren eine Windschutzscheibe mit den Merkmalen der erfindungsgemäßen beschichteten Scheibe mit einem Kommunikationsfenster.

Die Erfindung umfasst des Weiteren ein Verfahren zur Herstellung einer beschichteten Scheibe mit einem Kommunikationsfenster. In einem ersten Verfahrensschritt wird eine Grundscheibe mit einer metallhaltigen Beschichtung versehen. Das Aufbringen der metallhaltigen Beschichtung erfolgt bevorzugt mittels Sputtern, bevorzugt Magnetronsputtern. In einem anschließenden Schritt wird eine einschichtete Gitterfläche auf der metallhaltigen Beschichtung aus sich kreuzenden, parallelen Gitterlinien entschichtet. Die Entschichtung erfolgt bevorzugt mit einem Laser. Die Gitterfläche wird so entschichtet, dass die sich kreuzenden, parallelen Gitterlinien einen Winkel α (Alpha) von 30° bis 60° zur optischen Distorsionsrichtung der Grundscheibe umfassen. Die erfindungsgemäß angeordneten Gitterlinien verringern überraschenderweise die optisch sichtbaren Verzerrungen zwischen den beschichteten und teilentschichteten Bereichen des Kommunikationsfensters. Insbesondere die unterschiedliche Wärmeaufnahme von beschichteten Bereichen der Grundscheibe und den entschichteten Gitterlinien führt bei Kommunikationsfenstern nach dem Stand der Technik am Kommunikationsfenster schnell zu optischen Störungen, beispielsweise inhomogene Lichtreflexionen.

Der Laser wird bevorzugt mit einer Geschwindigkeit von 0,100 m/s bis 10 m/s entlang der metallhaltigen Beschichtung auf der Grundscheibe geführt. Der Laser weist bevorzugt eine Leistung von 1 W bis 10 kW auf und/oder umfasst bevorzugt einen Kohlendioxid-, YAG-, Nd-YAG-, Ytterbium-YAG-Laser, Holmium-YAG-Laser, Erbium-YAG-Laser, - Neodym-Glas-Laser, - Excimerlaser, - Faserlaser, - Disklaser, - Slablaser oder Dioden-Laser.

Der Laser wird bevorzugt über einen Plotter geführt. Der Plotter kann die Größe der Gitterflächen noch weiter steigern.

Die Erfindung umfasst des Weiteren die Verwendung der erfindungsgemäßen beschichteten Scheibe mit einem Kommunikationsfenster als Bau-, Fahrzeug-, Schiff-, Flugzeug-, Hubschrauber- oder Zugverglasung. Die erfindungsgemäße beschichtete Scheibe mit einem Kommunikationsfenster wird bevorzugt als Fahrzeugwindschutzscheibe verwendet.

Im Folgenden wird die Erfindung anhand von einer Zeichnung näher erläutert. Die Zeichnung ist eine rein schematische Darstellung und nicht maßstabsgetreu. Sie schränkt die Erfindung in keiner Weise ein. Die Positionen der schwarzen Linien markieren die entschichteten Bereiche. Diese entschichteten Bereiche wirken auf einer realen beschichteten Scheibe leicht heller als die beschichtete Umgebung.

Es zeigen:
Figur 1 eine schematische Darstellung einer Windschutzscheibe mit Sensorfenster nach dem Stand der Technik,
Figur 2 eine schematische Darstellung einer erfindungsgemäßen Windschutzscheibe,
Figur 3 eine schematische Darstellung des erfindungsgemäßen Sensorfensters,
Figur 4 ein Fliesschema des erfindungsgemäßen Herstellungsverfahrens.

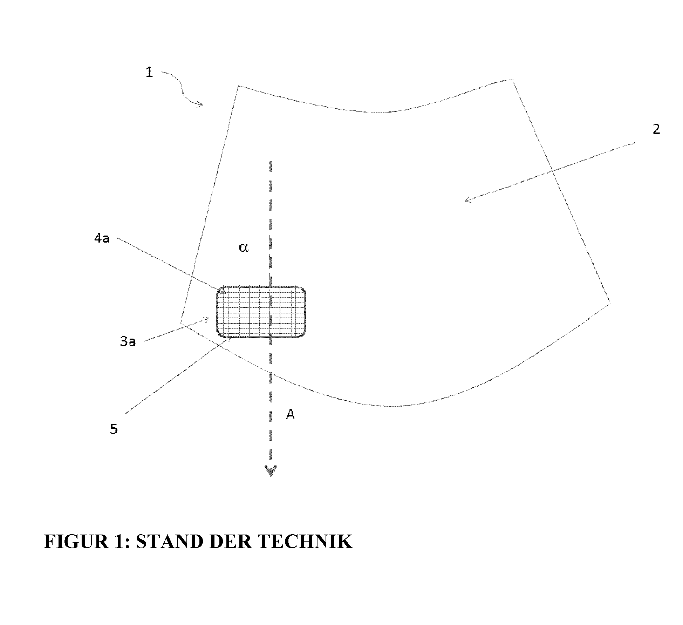

Figur 1 zeigt eine schematische Darstellung einer Windschutzscheibe mit Sensorfenster nach dem Stand der Technik. Auf der Grundscheibe (1) ist eine metallhaltige Beschichtung (2) aufgebracht. Im Randbereich der Grundscheibe (1) ist ein Sensorfenster (3a) nach dem Stand der Technik in Form eines linienförmig entschichteten Bereichs der metallhaltigen Beschichtung (2) angeordnet. Die sich kreuzenden, parallelen Gitterlinien (4) sind rechtwinklig im Winkel α (Alpha) zur optischen Distorsionsrichtung (A) der Grundscheibe (1) angeordnet. Die Distorsionsrichtung (A) gibt die Hauptrichtung optischer Verzerrungen einer Floatglasscheibe an, welche sich näherungsweise parallel zur Produktionsrichtung der Floatglasscheibe bilden. Die Floatstruktur liegt parallel zur Fahrzeuglängsachse. Dies erzeugt im Bereich des Sensorfensters (3a) nach dem Stand der Technik optische Störungen oder Verzerrungen auf der Oberfläche der benachbarten metallhaltigen Beschichtung (2).

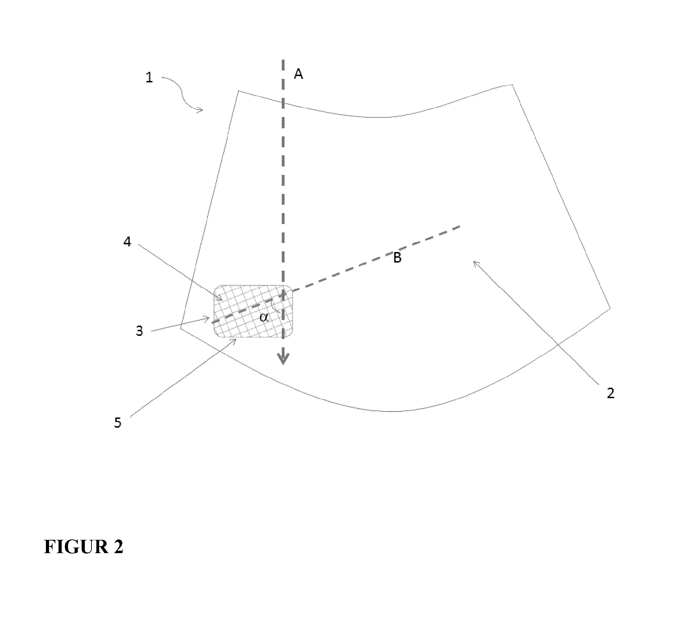

Figur 2 zeigt eine schematische Darstellung einer erfindungsgemäßen Windschutzscheibe. Im Randbereich der Grundscheibe (1) ist ein erfindungsgemäßes Sensorfenster (3) in Form eines linienförmig entschichteten Bereichs der metallhaltigen Beschichtung (2) angeordnet. Die sich kreuzenden, parallelen Gitterlinien (4) sind in einen Winkel α (Alpha) von 40° bis 50° zur optischen Distorsionsrichtung (A) der Grundscheibe (1) angeordnet. Die gedachte gestrichelte Linie B verlängert beispielhaft eine der sich kreuzenden parallelen Gitterlinien. Diese Anordnung der Gitterlinien (4) verringert wesentlich das Auftreten optischer Verzerrungen im Bereich des erfindungsgemäßen Sensorfensters (3).

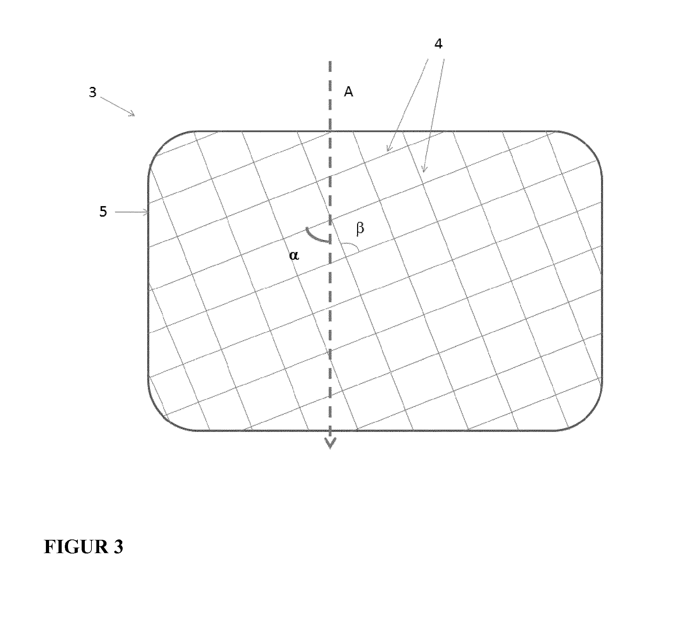

Figur 3 zeigt eine vergrößerte schematische Darstellung des erfindungsgemäßen Sensorfensters (3) welches vom Sensorfensterrand (5) begrenzt wird. Die sich kreuzenden, parallelen Gitterlinien (4) sind rechtwinklig im Winkel β (Beta) zueinander angeordnet. Der Ausdruck "rechtwinklig" umfasst im Sinne der Erfindung Abweichungen von plus/minus 15° von 90°. Die sich kreuzenden, parallelen Gitterlinien (4) nehmen einen Winkel α (Alpha) von 40° bis 50° zur optischen Distorsionsrichtung (A) der Grundscheibe (1) ein.

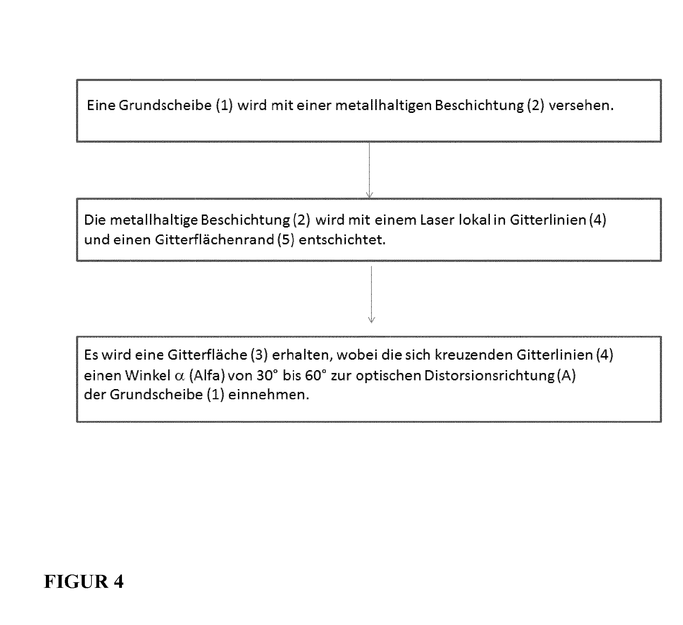

Figur 4 zeigt ein Fliesschema des erfindungsgemäßen Herstellungsverfahrens. In einem ersten Verfahrensschritt wird eine Grundscheibe (1) mittels Sputtern mit einer metallhaltigen Beschichtung (2) aus Silber versehen. In einem anschließenden Schritt wird eine einschichtete Gitterfläche (3) und einem Gitterflächenrand (5) auf der metallhaltigen Beschichtung (2) aus sich kreuzenden, parallelen Gitterlinien (4) entschichtet. Die Entschichtung erfolgt bevorzugt mit einem Laser. Die Gitterfläche (3a) wird so entschichtet, dass die sich kreuzenden, parallelen Gitterlinien (4) einen Winkel α (Alfa) von 30° bis 60° zur optischen Distorsionsrichtung (A) der Grundscheibe (1) einnehmen. Die erfindungsgemäß angeordneten Gitterlinien (4) verringern überraschenderweise die optisch sichtbaren Verzerrungen zwischen den beschichteten (2) und teilentschichteten (3) Bereichen der Grundscheibe (1).

**Bezugszeichenliste**

| | |
|---|---|
| (1) | Grundscheibe |
| (2) | metallhaltige Beschichtung |
| (3) | Gitterfläche (erfindungsgemäß) |
| (3a) | Gitterfläche (Stand der Technik) |
| (4) | kreuzende, parallele Gitterlinien (erfindungsgemäß) |
| (4a) | kreuzende, parallele Gitterlinien (Stand der Technik) |
| (5) | Gitterflächenrand |
| (A) | optischen Distorsionsrichtung |
| (B) | gedachte Verlängerung einer kreuzenden, parallelen Gitterlinie |
| (α) | Winkel der Gitterlinien zur Distorsionsrichtung der Grundscheibe |
| (β) | Winkel der sich kreuzenden, parallelen Gitterlinien |

## Patentansprüche

1. Beschichtete Scheibe mit Kommunikationsfenster mindestens umfassend:
a. eine Grundscheibe (1),
b. eine metallhaltige Beschichtung (2) auf der Grundscheibe (1),
c. eine einschichtete Gitterfläche (3) auf der metallhaltigen Beschichtung (2) aus sich kreuzenden, parallelen Gitterlinien (4), wobei
d. die sich kreuzenden, parallelen Gitterlinien (4) einen Winkel α (Alpha) von 30° bis 60° zur optischen Distorsionsrichtung (A) der Grundscheibe (1) umfassen.

2. Beschichtete Scheibe nach Anspruch 1, wobei die Gitterlinien (4) eine Breite von 30 µm bis 200 µm, besonders bevorzugt 70 µm bis 120 µm aufweisen.

3. Beschichtete Scheibe nach Anspruch 1 oder 2, wobei die Gitterlinien (4) Quadrate, Rauten, Parallelogramme und/oder Rechtecke bilden.

4. Beschichte Scheibe nach einem der Ansprüche 1 bis 3, wobei die Gitterlinien (4) einen Abstand von 0,1 mm bis 15 mm, bevorzugt 0,7 mm bis 3 mm aufweisen.

5. Beschichtete Scheibe nach einem der Ansprüche 1 bis 4, wobei die metallhaltige Beschichtung (2) undurchlässig für Radar- und/oder Radiowellen ist.

6. Beschichtete Scheibe nach einem der Ansprüche 1 bis 5, wobei die Grundscheibe (1) einen Schwarzdruck (5) auf 2% bis 20 % der Oberfläche der Grundscheibe (1) aufweist.

7. Beschichtete Scheibe nach einem der Ansprüche 1 bis 6, wobei die parallelen Gitterlinien einen Winkel α (Alpha) von 40° bis 50° zur optischen Distorsionsrichtung (A) der Grundscheibe (1) einnehmen.

8. Windschutzscheibe umfassend eine beschichtete Scheibe nach den Ansprüchen 1 bis 7.

9. Verfahren zur Herstellung einer beschichteten Scheibe mit Kommunikationsfenster, wobei,
a. eine Grundscheibe (1) mit einer metallhaltigen Beschichtung (2) versehen wird,
b. die metallhaltige Beschichtung (2) mit einem Laser lokal in Gitterlinien (4a) entschichtet wird und eine Gitterfläche (3a) und einen Gitterflächenrand (3c) erhalten wird, wobei die sich kreuzenden Gitterlinien (4) einen Winkel α (Alpha) von 30° bis 60° zur optischen Distorsionsrichtung (A) der Grundscheibe (1) einnehmen.

10. Verfahren nach Anspruch 9, wobei die metallhaltige Beschichtung mit einem Nd-YAG -Laser entschichtet wird.

11. Verfahren nach Anspruch 9 oder 10, wobei der Laser mit einer Geschwindigkeit von 0,100 m/s bis 10 m/s entlang der Scheibenkante der Grundscheibe (1) geführt wird.

12. Verfahren nach einem der Ansprüche 9 bis 11, wobei der Laser einen Kohlendioxid-, YAG-, Nd-YAG- oder Dioden-Laser umfasst.

13. Verfahren nach einem der Ansprüche 9 bis 12, wobei der Laser eine Leistung von 0,001 kW bis 10 kW aufweist.

14. Verwendung der beschichteten Scheibe nach einem der Ansprüche 1 bis 8 als Bau-, Fahrzeug-, Schiff-, Flugzeug-, Hubschrauber- oder Zugverglasung, bevorzugt als Fahrzeugwindschutzscheibe.
